**Europäisches Patentamt**

**European Patent Office**

**Office européen des brevets**

(19)

(11) Numéro de publication : **0 509 874 A1**

## (12) DEMANDE DE BREVET EUROPEEN

(21) Numéro de dépôt : **92400938.4**

(22) Date de dépôt : **03.04.92**

(51) Int. Cl.⁵ : **B60G 25/00**, B62D 33/06, B60G 15/06, B60G 11/08, B60G 11/44

(30) Priorité : **18.04.91 FR 9104789**

(43) Date de publication de la demande : **21.10.92 Bulletin 92/43**

(84) Etats contractants désignés : **BE DE ES GB IT**

(71) Demandeur : **RENAULT AGRICULTURE S.A. 7, Rue Dewoitine F-78140 Velizy-Villacoublay (FR)**

(72) Inventeur : **Delaudiere, Robert 8, rue Albert Pichon F-78410 Velizy (FR)** Inventeur : **Lacheteau, Bruno 5, rue de Noyers-Beauplan F-78470 St-Remy-les-Chevreuse (FR)**

(74) Mandataire : **Ernst-Schonberg, Michel REGIE NATIONALE DES USINES RENAULT SA, Sce 0267, 860, quai de Stalingrad F-92109 Boulogne Billancourt Cédex (FR)**

(54) **Tracteur agricole équipé d'une suspension basse fréquence.**

(57) Tracteur agricole du genre comprenant un ensemble roulant (1) à ponts et essieux de roues avant et arrière et une cabine de commande (2) avec interposition entre ledit ensemble roulant (1) et ladite cabine (2) d'un moyen de suspension élastique (3, 5) du type à lames flexibles (7, 50) disposées transversalement parallèlement aux essieux de roues et fixées en une partie centrale (9-51) avec le pont de véhicule (1) et solidarisées au niveau de leurs extrémités longitudinales avec la cabine (2), avec agencement d'amortisseurs (24 - 25) (58, 59) entre cabine (2) et poutre (1), caractérisé par des moyens de solidarisation des lames (7-50) à la cabine (2) qui, à chaque extrémité de lames (7-50), assurent en outre la solidarisation d'une tête d'amortisseur (24-25) (58-59) dont le corps inférieur est fixé à la poutre par des moyens d'ancrage autorisant un léger débattement angulaire dudit amortisseur (24-25-58-59) autour dudit moyen d'ancrage (34).

Un tel tracteur a la propriété d'amortir les vibrations basse fréquence de chocs. Il est de construction simple et de fonctionnement efficace. En outre, il permet un démontage aisé de la cabine.

FIG.1

EP 0 509 874 A1

La présente invention concerne un tracteur agricole du genre comprenant un ensemble roulant motorisé à ponts et essieux de roues avant et arrière appelé "poutre" et une cabine de commande avec interposition entre ledit pont et ladite cabine d'un moyen de suspension élastique du type à lames flexibles disposées transversalement parallèlement aux essieux de roues et fixées en une partie centrale sur la transmission de véhicule et solidarisées à la cabine au niveau de leurs extrémités longitudinales, avec agencement d'amortisseurs entre cabine et poutre.

Un tel tracteur est décrit dans FR-A-2 432 966 qui vise une suspension élastique destinée à absorber divers chocs et les oscillations de roulis et tangage de la cabine, dont le but est de permettre une conduite satisfaisante même lorsque le tracteur se déplace sur terrain irrégulier. Il ressort clairement de ce brevet FR-A-2 432 966 que le but escompté ne peut être atteint qu'au prix d'une extraordinaire complexité mécanique telle qu'à ce jour aucun tracteur de ce type n'a été proposé commercialement.

La présente invention a pour objet un tracteur équipé d'un dispositif d'isolation basse fréquence aux chocs et/ou aux vibrations interposé entre une cabine et la poutre de véhicule qui a pour but d'apporter un confort important au niveau des vibrations basses fréquences en permettant à la fois d'atténuer la transmission à la cabine des chocs et/ou des vibrations provenant du pont du véhicule, par une souplesse importante pour les mouvements intempestifs de pompage, roulis et tangage, c'est-à-dire respectivement mouvements d'oscillations verticales et d'oscillations en rotation autour des axes longitudinal et transversal du véhicule, et de guider la cabine par une rigidité importante pour les mouvements selon les degrés de liberté d'avance, tamis et lacet, c'est-à-dire respectivement mouvements d'oscillations horizontales, longitudinales, transversales et de rotation autour de l'axe vertical de la cabine.

Un autre but de la présente invention est un tracteur équipé d'une suspension qui présente à la fois les qualités d'efficacité opératoire et de simplicité technique. Encore un autre but de l'invention est de proposer un tracteur qui est équipé d'une suspension de cabine peu encombrante, qui permet une mise en place facile et un accès aisé aux nombreux accessoires nécessaires agencés entre cabine et poutre du véhicule. Encore un autre but de l'invention est d'assurer un démontage simple et rapide de la cabine de tracteur, de la transmission, de façon à permettre toute réparation.

Ces différents objectifs de l'invention sont atteints par des moyens de solidarisation des lames à la cabine qui, à chaque extrémité de lames, assurent en outre la solidarisation d'une tête d'amortisseur dont le corps inférieur est fixé à la poutre par des moyens d'ancrage autorisant un léger débattement angulaire dudit amortisseur autour dudit moyen d'ancrage. De préférence, on prévoit une barre anti-roulis agencée transversalement avec fixation en son centre au pont arrière du véhicule, et solidarisée à ses extrémités à la cabine par l'intermédiaire de biellettes à rotule.

Le fait qu'un moyen de solidarisation d'une lame ou d'une biellette à la cabine sert également à la fixation d'une tête d'amortisseur, assure à la fois une efficacité maximale de l'amortisseur, placée au niveau de plus fort débattement d'une extrémité de lame ou biellette, une simplification de l'appareillage technique, et une compacité de l'appareillage de suspension qui assure une meilleure accessibilité au faible espace entre cabine et poutre, où se situe une grande concentration d'organes accessoires et de commande. En outre, on comprend que la désolidarisation de la cabine de l'ensemble transmission s'en trouve facilitée.

L'invention propose certaines mises en oeuvre préférentielles :

- Une lame flexible est fixée au moyen de solidarisation à la cabine par l'intermédiaire d'une biellette articulée de compensation des variations d'écartement entre les deux extrémités d'une lame sous l'effet des variations de courbure de ladite lame. De la sorte, les lames flexibles transversales subissent avec souplesse toutes les déformations résultant des irrégularités de terrain.

- Un amortisseur est ancré à la poutre et solidarisé à la cabine de façon que son corps longitudinal soit substantiellement tangent au cercle de débattement des extrémités d'une lame flexible. Il résulte de cette disposition une plus faible amplitude d'oscillations de la partie inférieure d'ancrage de l'amortisseur, évitant ainsi toute fatigue excessive de métal au niveau de cet ancrage.

- Les moyens de solidarisation à la cabine sont des pièces en forme de chape soudées à la cabine et dont les ailes servent à la réception d'axes d'extrémité de la lame ou d'extrémité de biellettes et simultanément d'axes d'articulation de tête d'amortisseur. Une telle pièce en forme de chape est particulièrement adaptée à recevoir plusieurs axes côte à côte, sans compliquer excessivement les modalités de montage et démontage.

Les caractéristiques et avantages de l'invention ressortiront d'ailleurs de la description qui suit à titre d'exemple, en référence aux dessins annexés dans lesquels:

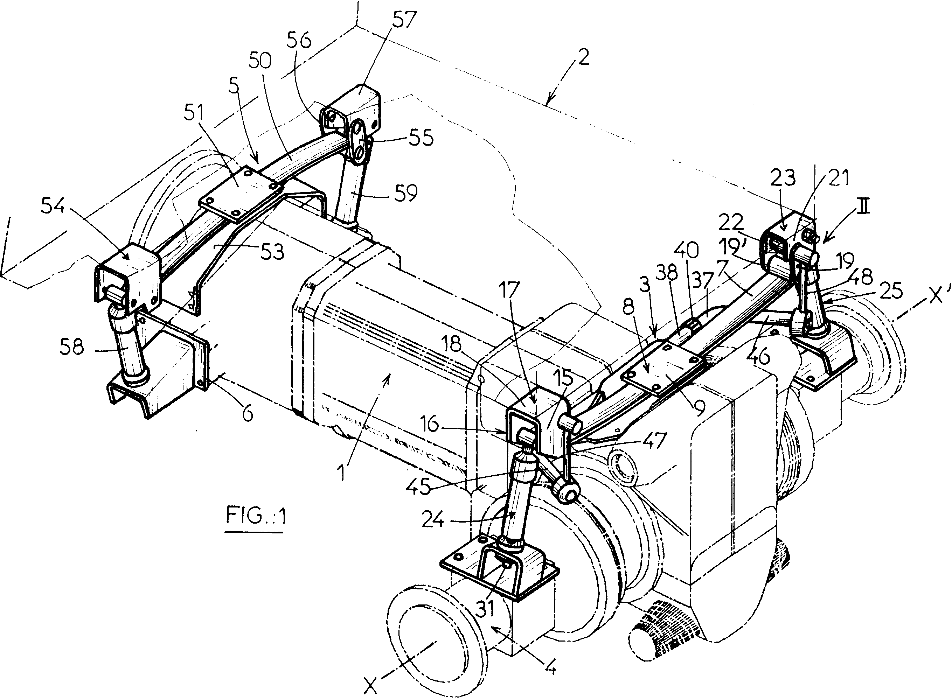

- la figure 1 est une vue en perspective d'un tracteur selon l'invention ;
- les figures 2 et 3 sont des vues de détails de la figure 1 de lames de suspension côté droit et côté gauche;

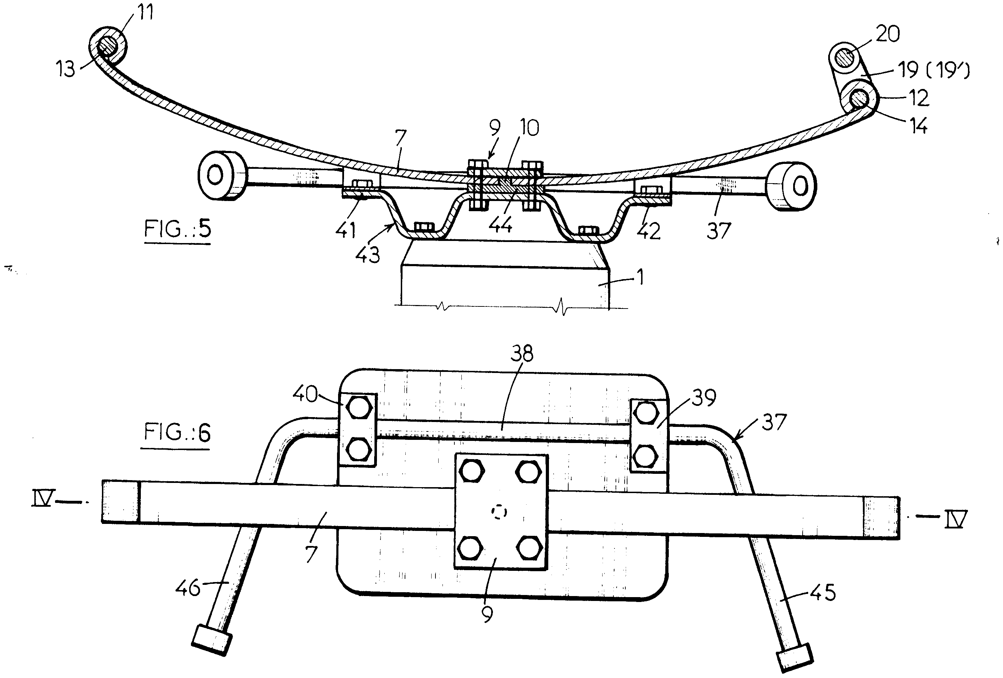

- les figures 4, 5 et 6 sont des vues en coupe à échelle agrandie de détails.

En se référant aux dessins annexés, un tracteur agricole comporte un ensemble moteur-transmission arrière et avant 1 pratiquement indéformable, représenté en trait mixte et une cabine de commande 2 également représentée en trait mixte. Entre l'ensemble transmission (poutre) 1 et la cabine 2 est aménagé un double dispositif de suspension, l'un 3 au niveau de l'essieu arrière 4, l'autre 5 au niveau de l'avant de la transmission 6.

Le moyen de suspension arrière 3 comporte une lame flexible 7 --ou une pluralité de telles lames flexibles empilées les unes sur les autres-- s'étendant transversalement, c'est-à-dire parallèlement à l'axe X-X' de l'essieu arrière. Cette lame 7 présente une légère courbure à concavité tournée vers le haut. Elle est fixée au corps de l'ensemble transmission 1 en une partie centrale 8 au moyen d'un étrier boulonné 9 avec centrage par étoquiau 10.

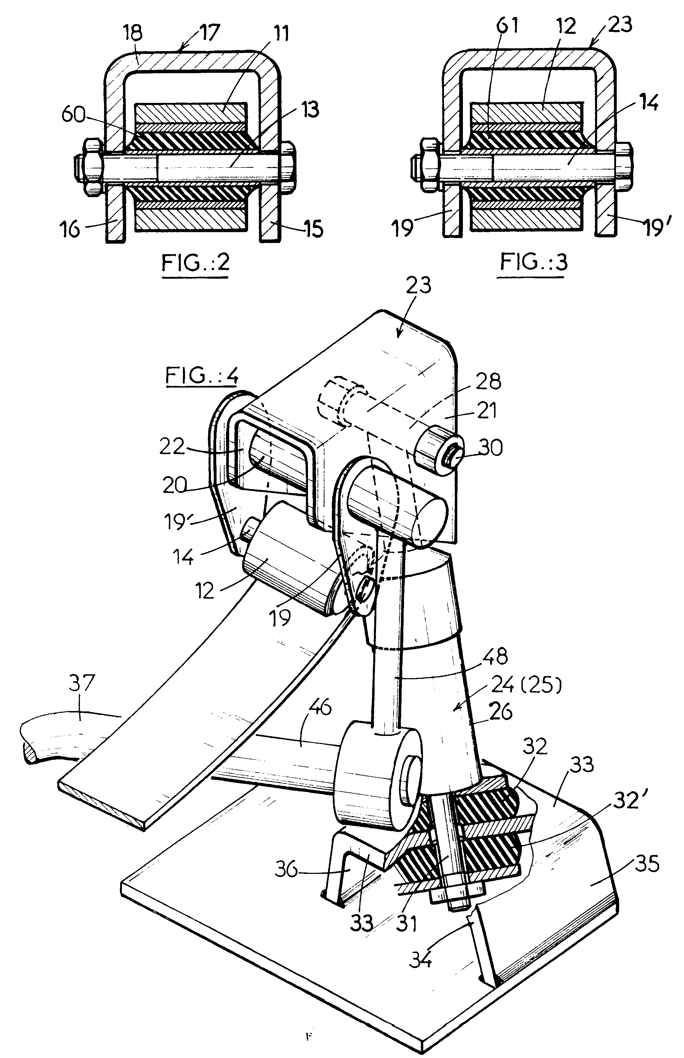

Les deux extrémités de la lame 7 sont conformées en deux portées cylindriques ou oeils 11 et 12 destinées à recevoir des axes d'articulation 13 et 14. En se référant plus particulièrement à la figure 2, à l'extrémité gauche --selon le sens de déplacement du tracteur-- l'extrémité cylindrique de lame 11 est engagée entre les ailes 15 et 16 d'une chape 17 en forme de U inversé dont la base 18 est soudée à un plancher de la cabine 2. L'axe d'articulation 13 est engagé au travers des ailes 15 et 16 de la chape 17 et dans l'évidement cylindrique 11 par l'intermédiaire d'un manchon souple 60 et est solidement maintenu en position par boulonnage. A l'extrémité droite (cf. figure 3), l'oeil 12 de la lame flexible 7 coopère toujours par l'intermédiaire d'un manchon souple 61 avec deux biellettes ou jumelles 19 et 19' aux extrémités desquelles il est solidarisé par l'axe d'articulation 14.

Ces biellettes 19, 19' sont elles-mêmes solidarisées, à leurs autres extrémités par axe d'articulation 20 aux ailes 21 et 22 d'une seconde chape 23 fixée au plancher de la cabine 2.

A chaque extrémité de la lame flexible 7 est agencé un élément amortisseur 24, 25, à corps cylindrique et tige de piston portant une partie cylindrique transversale 28 incorporant par l'intermédiaire d'un manchon souple un tronçon de tube pour la réception d'un axe d'articulation 30 fixé également au travers des ailes 21 et 22 de la chape 23. Le corps cylindrique 26 d'un amortisseur 24 et 25 porte à son extrémité basse une tige-support 31, autour de laquelle sont bloquées deux coupelles en matériau élastique 32 et 32' enserrant une base 33 d'une chape en U inversé 34 dont les ailes 35 et 36 sont soudées sur une pièce en regard de l'ensemble transmission 1.

Une barre de torsion anti-roulis 37 s'étend transversalement avec une partie centrale 38 ancrée par deux paliers 39 et 40 sur deux ressauts 41 et 42 d'une pièce intermédiaire 43 d'appui de la lame flexible 7 fixée en une partie centrale relevée 44 de ladite pièce par étrier boulonné 9. La barre 37 présente deux bras 45 et 46 aux extrémités desquels sont articulées deux biellettes rotulées 47 et 48, dont les autres extrémités sont fixées par boulonnage entre une aile 15, 21, des chapes 17, 23 respectivement.

Le moyen de suspension avant 5 comporte également une ou plusieurs lames flexibles 50 à courbure à concavité tournée vers le bas, fixées sur une partie centrale par étrier boulonné 51, sur un support en forme de voûte 53 lui -même fixé sur l'ensemble transmission. De même que pour le moyen de suspension arrière, la lame 50 est articulée, à gauche, directement à une chape 54 et, à droite, par l'intermédiaire de deux biellettes 55 et 56 à une chape 57. Des amortisseurs 58 et 59 relient respectivement les chapes 54 et 57 à l'ensemble transmission 1.

## Revendications

1. Tracteur agricole du genre comprenant un ensemble roulant (1) à ponts et essieux de roues avant et arrière et une cabine de commande (2) avec interposition entre ledit ensemble roulant (1) et ladite cabine (2) d'un moyen de suspension élastique (3, 5) du type à lames flexibles (7, 50) disposées transversalement parallèlement aux essieux de roues et fixées en une partie centrale (9-51) avec la poutre du véhicule (1) et solidarisées au niveau de leurs extrémités longitudinales avec la cabine (2), avec agencement d'amortisseurs (24-25) (58, 59) entre cabine (2) et poutre (1), caractérisé par des moyens de solidarisation des lames (7-50) à la cabine (2) qui, à chaque extrémité de lames (7-50), assurent en outre la solidarisation d'une tête d'amortisseur (24-25) (58-59) dont le corps inférieur est fixé à la poutre par des moyens d'ancrage autorisant un léger débattement angulaire dudit amortisseur (24-25-58-59) autour dudit moyen d'ancrage (34).

2. Tracteur agricole selon la revendication 1, caractérisé en ce qu'une lame flexible (7-50) est fixée au moyen de solidarisation à la cabine par l'intermédiaire de biellettes articulées (19-19') (55-56) de compensation des variations d'écartement entre les deux extrémités (11-12) d'une lame (7-50) sous l'effet des variations de courbure de ladite lame.

3. Tracteur agricole selon la revendication 1 ou 2, caractérisé par une barre anti-roulis (37) agencée transversalement avec fixation en une zone centrale (39-40) au pont arrière du véhicule, et solidarisée à ses extrémités à la cabine (2) par l'intermédiaire de biellettes à rotule (47-48).

4. Tracteur agricole selon la revendication 2 ou 3, caractérisé en ce qu'un amortisseur (24-25-58-59) est ancré à la poutre (1) et solidarisé à la cabine (2) de façon que son corps longitudinal soit substantiellement tangent au cercle de débattement des extrémités d'une lame flexible (7-50).

5. Tracteur agricole selon l'une quelconque des revendications 1 à 4, caractérisé en ce que les moyens de solidarisation à la cabine (1) sont des pièces en forme de chape (17-23-54-57) soudées à la cabine et dont les ailes (15-16) (21-22) servent à la réception d'axes d'extrémité de la lame (7-50) ou d'extrémité de biellettes (19, 19') (55-56) et simultanément d'axes (28) de tête d'amortisseur (25-26) (58-59).

EP 0 509 874 A1

FIG.1

5

FIG.:2

FIG.:3

FIG.:4

FIG:5

FIG:6

Office européen
des brevets

**RAPPORT DE RECHERCHE EUROPEENNE**

Numero de la demande

EP 92 40 0938

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-2 407 092 (MC NAMARA) <br> * colonne 2, ligne 9 - colonne 3, ligne 9; figures * <br> --- | 1 | B 60 G 25/00 <br> B 62 D 33/06 <br> B 60 G 15/06 <br> B 60 G 11/08 <br> B 60 G 11/44 |
| A | US-A-3 014 736 (MORENO et al.) <br> * figure 1 * <br> --- | 1 | |
| A | US-A-3 157 395 (BUDZYNSKI et al.) <br> * colonne 1, ligne 33 - colonne 2, ligne 32; figures * <br> --- | 1 | |
| A,D | FR-A-2 432 966 (CENTRO RICERCHE FIAT) <br> * page 2, ligne 10 - page 3, ligne 14; figure 3 * <br> --- | 1 | |
| A | US-A-3 379 269 (ZETYE) <br> * figure 1 * <br> ----- | 3 | |

| | |
|---|---|
| | DOMAINES TECHNIQUES RECHERCHES (Int. Cl.5) |
| | B 60 G <br> B 62 D |

Le présent rapport a été établi pour toutes les revendications

| Lieu de la recherche | Date d'achèvement de la recherche | Examinateur |
|---|---|---|
| BERLIN | 14-07-1992 | BROYDE M P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P0402)